# EUROPEAN PATENT APPLICATION

(11) **EP 2 253 486 A1**
(43) Veröffentlichungstag der Anmeldung: **24.11.2010**
(21) Anmeldenummer: 09710752.8
(22) Anmeldetag: 14.01.2009
(51) Int. Cl.: B60C 17/04, B60B 25/02

(54) **SICHERHEITSRAD (VARIANTEN)**

(30) Priorität: 14.02.2008 RU 2008105164
(71) Anmelder: Mishin, Aleksey Fedorovich, Ekaterinburg 620130 (RU)
(72) Erfinder: Mishin, Aleksey Fedorovich, Ekaterinburg 620130 (RU)
(74) Vertreter: Jeck, Anton
(86) Internationale Anmeldenummer: PCT/RU2009/000004
(87) Internationale Veröffentlichungsnummer: WO 2009/102235

(57) **Zusammenfassung**

Die Erfindung betrifft ein Sicherheitsrad, das aus einer Scheibe und einem Segmentkranz mit Schultern für einen Reifenbord besteht, dessen Segmente durch Querschnitte geteilt sind, wobei die Kranzkonstruktion eine Bodenaufstandsfläche aufweist, die sich zwischen den Reifenborden befindet und deren Außendurchmesser den Spurkranzdurchmesser übersteigt. Dabei ist vorgesehen, dass die Anzahl der Segmente mindestens zwei ist, wobei die Kreuzsegmente keine Spurkränze haben und dass sie an der Scheibe mit dem Spurkranz einerseits und an dem Ringspurkranz andererseits befestigt sind. Dadurch ist der Aufbau des Rades vereinfacht, macht das Rad fester und sicherer, es vereinfacht die Herstellungs- und Montagetechnologie. Zudem ist das Rad in existierende Fahrzeuge einzubauen, ohne die Nabenkonstruktion zu ändern.

## Beschreibung

Die Erfindung betrifft ein Sicherheitsrad nach dem Oberbegriff des Anspruchs 1.

Die Erfindung gehört zum Gebiet des Maschinenbaus und kann in allen Fahrzeugen benutzt werden, die luftbereifte Räder haben.

Bekannt ist "Ein luftbereiftes Rad, das die Bewegung des Fahrzeuges beim Druckabfall in dem Reifen möglich macht", das aus einem Luftgummireifen und einer zusätzlichen gleichachsigen Teilkammer besteht, die sich außerhalb des Reifens befindet und beim Druckabfall in dem Reifen mit dem Grund oskuliert (EP Jfe 0311415 MPK 4 B 60 B 11/06 89.04.12).

Bekannt ist ein Autorad mit einer erhöhten Sicherheit (Patent RU Jfe 2090374 MPK B60C 17/07).

Zu den Nachteilen dieser Räder zählt man den Konstruktions- und Montageaufwand, die Notwendigkeit der Anwendung von Reifen mit einem komplizierten Querschnitt.

Am ähnlichsten zur Erfindung hinsichtlich des technischen Wesens ist "Ein Rad mit einem Segmentkranz, das eine Bewegung beim Druckabfall möglich macht" (Anmeldung RU 99114490 MPK B60B 25/02, 21/02, 21/12). Das Rad besteht aus mindestens drei Segmenten mit Spurkränzen und Schultern für Reifenborde, dessen Segmente durch Querschnitte geteilt sind. Dabei hat die Kranzkonstruktion eine Bodenaufstandsfläche, die sich zwischen den Reifenborden befindet und derer Außendurchmesser den Spurkranzdurchmesser übersteigt.

Das Rad weist eine komplizierte Konstruktion auf, denn die Spurkränze auf den Kranzsegmenten erschweren die Radmontage und erfordern eine Teilung des Kranzes in mindestens drei Segmente. Für deren Montage und Befestigung im zusammengebauten Zustand sind ein formschwieriger Querschnitt, das Vorhandensein von Kegelflächen, die die Segmente zum Radzentrum komprimieren, und eine formschwierige Dichtung für eine nötige Abdichtung.

Es ist Aufgabe der Erfindung, den Aufbau des Rades zu vereinfachen, das Rad fester und sicherer sowie in seiner Herstellungs- und Montagetechnologie zu vereinfachen. Zudem ist es möglich, ein Rad in existierende Fahrzeuge einzubauen, ohne die Nabenkonstruktion zu ändern. Die Konstruktion lässt auch den Durchmesser der Bremsscheibe steigern, was die Wirksamkeit der Bremsen wesentlich erhöht.

Das beschriebene technische Ergebnis wird dadurch erreicht, dass das Rad aus einer Scheibe und einem Segmentkranz mit Schultern für Reifenborde besteht, dessen Segmente durch Querschnitte geteilt sind. Dabei hat der Segmentkranz eine Bodenaufstandsfläche, die sich zwischen den Reifenborden befindet und deren Außendurchmesser den Spurkranzdurchmesser übersteigt. Entsprechend der Erfindung gibt es mindestens zwei Segmente, die keine Spurkränze haben und einerseits an die Scheibe an dem Spurkranz und andererseits an dem Ringspurkranz befestigt sind. Die Querschnitte sind platt und liegen radial.

Zur Abdichtung des Reifens sind die Querschnitte und die Stellen der Befestigung des Kranzes an der Scheibe und dem Ringspurkranz mit Dichtungen ausgestattet.

Die Herstellung eines Zweisegmentkranzes ist möglich, da die Kranzsegmente keine Spurkränze aufweisen. Dies ermöglicht es, den durch die Einführung der Segmente in den Reifen im Laufe der Montage mit einer darauf folgenden Kopplung und Zentrieren zu montieren. Das vereinfacht die Herstellung und macht die Radkonstruktion fester. Das Vorhandensein des Spurkranzes auf der Scheibe einerseits und des Ringspurkranzes andererseits ermöglicht eine zusätzliche Umklammerung der Reifenborde in axialer Richtung. Das verringert die Möglichkeit der Verdrehung des Reifens auf dem Kranz. Bei einer ziemlich starken Umklammerung ist es möglich, die Aufspannungskraft des Reifenbordes auf die Felgenschulter zu vermindern oder sie völlig loszuwerden. Dadurch ist die Montage vereinfacht.

So eine Anordnung der Schultern für die Reifenborde ist bequem, wenn ihr Neigungswinkel Null beträgt oder einen negativen Wert hinsichtlich eines Standardwinkels aufweist. Die platten und radialen Querschnitte vereinfachen die Konstruktion und erleichtern die Montage der Dichtungen zwecks Abdichtung des Rades mit einem schlauchlosen Reifen.

Was eine zweite Variante der Erfindung angeht, so sind die Kranzsegmente ohne Spurkränze und Schultern für die Reifenborde erzeugt, was den Kranz enger macht. Deshalb sind seine Montage in die Reifen und die Herstellung seiner Radeinzelteile wesentlich vereinfacht. Dabei bleiben alle Vorteile erhalten, die in der ersten Variante beschrieben sind. Außerdem weist der Neigungswinkel der Schultern für die Reifenborde in dieser Konstruktion einen Standardwert auf und lässt Standardreifen benutzen.

Die Erfindung wird anhand eines in den Zeichnungen dargestellten Ausführungsbeispiels näher erläutert. Es zeigen:
- Fig. 1: das zusammengebaute Rad (im Querschnitt), wobei die Schultern für die Reifenborde Kranzelemente sind,
- Fig. 2: dasselbe Rad, bei dem die Schultern für die Reifenborde Scheiben- und Ringspurkranzelemente sind,
- Fig. 3: ein Rad ohne Scheibe (in Seitenansicht), mit in den Reifen montierten Kranzsegmenten und
- Fig. 4: die Stufen der Montage eines Zweisegmentkranzes.

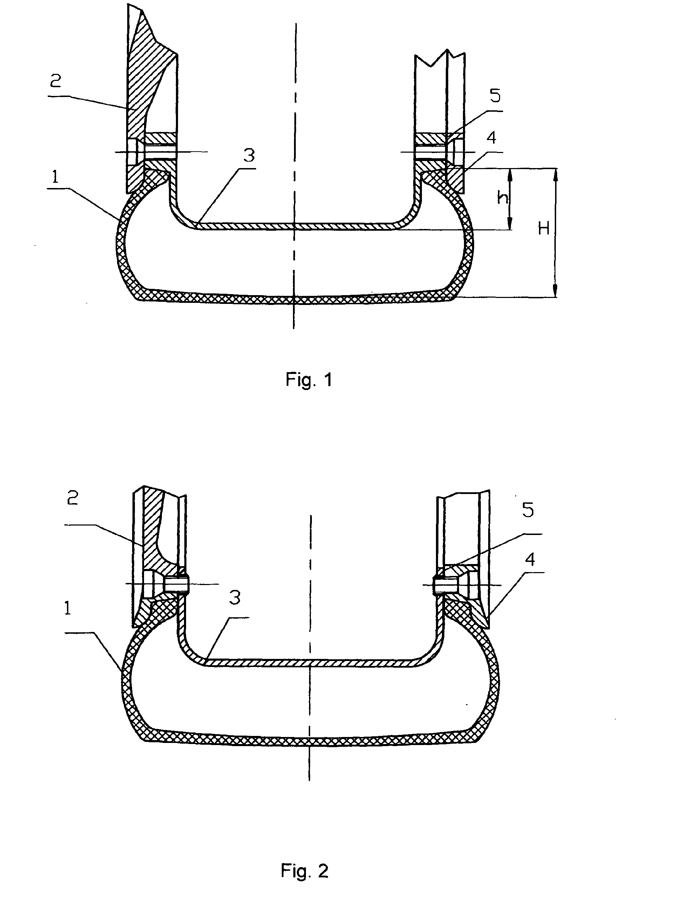

In Fig. 1 zeigt 1 den Reifen und 2 die Radscheibe mit dem Spurkranz, während in Fig. 2 der Spurkranz eine Schulter für einen Reifenbord 3 trägt. In den Fig. 1, 2 und 3 sind Dichtungen 5 vorgesehen, die die Stellen zwischen den Reifenborden 3 abdichten, wenn die Montage ausgeführt ist.

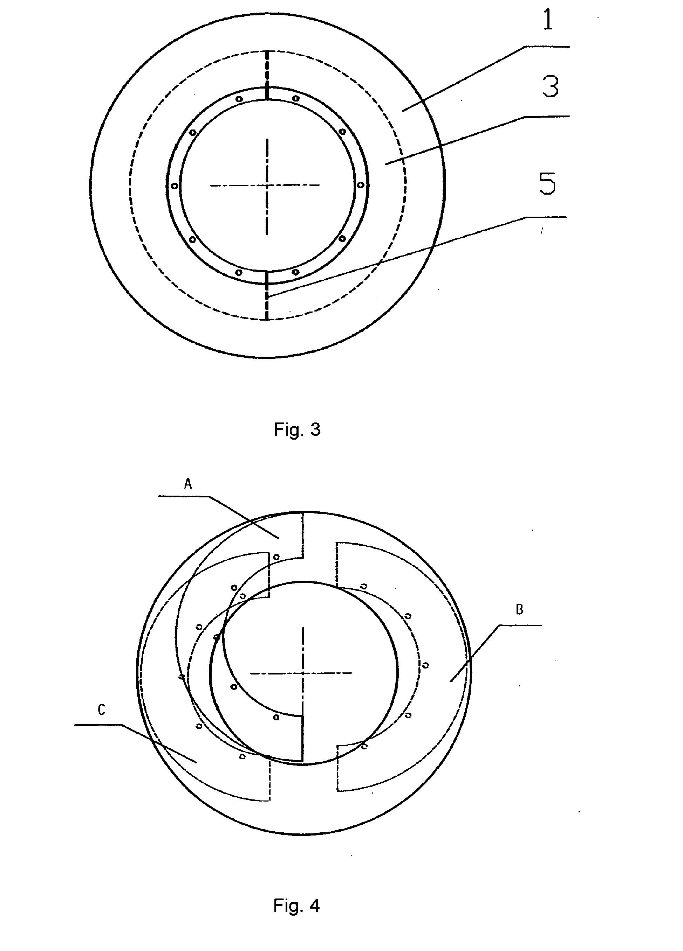

In Fig. 4 zeigt A) die Anfangsstellung des Segments im Laufe der Kranzmontage in den Reifen, B) - die Zwischenstellung des ersten Segments und C) - die Zwischenstellung des zweiten Segments.

Die Fig. 4, Stellung A) zeigt uns, dass für einen Zweisegmentkranz der maximale Durchmesser der Bodenaufstandsfläche des Segments durch den inneren Reifendurchmesser begrenzt ist. Geometrische Berechnungen zeigen, dass die Profilhöhe der Bodenaufstandfläche h in diesem Fall innerhalb von 50 % der Höhe des inneren Reifenprofils H liegt (Fig. 1), ohne die Elastizität des Reifens während der Montage zu berücksichtigen. Um einen größeren Wert dieses Parameters zu erreichen, kann man die Anzahl der Segmente vergrößern.

Außerdem kann man in dieser Stellung sehen, dass für die Einführung des Kranzsegments in den Reifen eine Erweiterung der Reifenborde 3 seitens der Bodenaufstandsfläche des Segments notwendig ist. Die nachgiebigen Eigenschaften von Gummi lassen solche Umformungen zu. Nach der Aufstellung des ersten Segments in die Stellung A) geht sie in die Stellung B) über, um das zweite Segment analog in die Stellung C) zu bringen. Aus der Stellung B) und C) werden die beiden Segmente in dem Reifen mit Dichtungen 5 zentriert, die im Voraus in der in Fig. 3 dargestellten Stellung angeordnet sind. Nach der Anordnung der Kranzsegmente in der zentralen Stellung, wie in Fig. 3 dargestellt ist, werden sie an der Scheibe 2 und dem Ringspurkranz mit Bolzen oder Nadeln mit Muttern, die Kegelflächen für ein Selbstzentrieren aufweisen, befestigt.

## Patentansprüche

1. Sicherheitsrad, das aus einer Scheibe (2) und einem Segmentkranz mit Schultern für einen Reifenbord (3) besteht, dessen Segmente durch Querschnitte geteilt sind, wobei die Kranzkonstruktion eine Bodenaufstandsfläche aufweist, die sich zwischen den Reifenborden (3) befindet und deren Außendurchmesser den Spurkranzdurchmesser übersteigt,
**dadurch gekennzeichnet,**
**dass** die Anzahl der Segmente mindestens zwei ist, wobei die Kranzsegmente keine Spurkränze haben und
**dass** sie an der Scheibe (2) mit dem Spurkranz einerseits und an dem Ringspurkranz andererseits befestigt sind.

2. Sicherheitsrad nach Anspruch 1,
**dadurch gekennzeichnet,**
**dass** die Querschnitte platt sind und radial anliegen.

3. Sicherheitsrad nach den Ansprüchen 1 und 2,
**dadurch gekennzeichnet,**
**dass** die Querschnitte und die Stellen der Befestigung des Kranzes an der Scheibe (2) und dem Ringspurkranz mit Dichtungen (5) ausgestattet sind.

4. Sicherheitsrad nach Ansprüchen 1 bis 3,
**dadurch gekennzeichnet,**
**dass** die Kranzsegmente an der Scheibe (2) mit dem Spurkranz und dem Ringspurkranz mittels einer Schraubenverbindung befestigt sind.

5. Sicherheitsrad, das aus einer Scheibe (2) und einem Segmentkranz besteht, dessen Segmente durch die Querschnitte geteilt sind, wobei die Kranzkonstruktion eine Bodenaufstandsfläche aufweist, die sich zwischen den Reifenborden (3) befindet und derer Außendurchmesser den Spurkranzdurchmesser übersteigt,
**dadurch gekennzeichnet,**
**dass** die Anzahl der Segmente mindestens zwei ist,
**dass** die Segmente keine Spurkränze und Schultern für die Reifenborde aufweisen und
**dass** sie an der Scheibe (2) mit dem Spurkranz und der Schulter für den Reifenbord (3) einerseits und an dem Ringspurkranz mit der Schulter für den Reifenbord (3) andererseits befestigt sind.

6. Sicherheitsrad nach Anspruch 5,
**dadurch gekennzeichnet,**
**dass** die Querschnitte platt sind und radial anliegen.

7. Sicherheitsrad nach Ansprüchen 5 und 6,
**dadurch gekennzeichnet,**
**dass** die Querschnitte und die Stellen der Befestigung des Kranzes an der Scheibe (2) und den Ringspurkranz mit Dichtungen (5) ausgestattet sind.

8. Sicherheitsrad nach Ansprüchen 5 bis 7,
**dadurch gekennzeichnet,**
**dass** die Kranzsegmente an der Scheibe (2) mit dem Spurkranz und der Schulter für den Reifenbord (3) einerseits und an den Ringspurkranz mit der Schulter für den Reifenbord (3) andererseits mittels einer Schraubenverbindung befestigt sind.
